# EUROPEAN PATENT SPECIFICATION

(11) **EP 2 727 468 B1**
(45) Date of publication and mention of the grant of the patent: **09.12.2015**
(21) Application number: 13190878.2
(22) Date of filing: 30.10.2013
(51) Int. Cl.: A21C 9/08, B65G 47/244

(54) **Line for the production and treatment of dough**
Fertigungsstraße zur Herstellung und Behandlung von Teig
Ligne pour la production et le traitement de pâte

(30) Priority: 02.11.2012 IT VR20120218
(43) Date of publication of application: 07.05.2014
(73) Proprietor: RONDO SCHIO S.R.L., 36015 SCHIO (VI) (IT)
(72) Inventor: Stevan, Paolo, 36061 Bassano Del Grappa VI (IT)
(74) Representative: Modiano, Micaela Nadia

(56) References cited:
- EP-A1- 2 277 809
- EP-A2- 1 709 872
- DE-A1- 2 427 818
- Rondo008: "Curl & More: Production of unfilled Croissants.", , 15 March 2012 (2012-03-15), page 1, XP054975181, Retrieved from the Internet: URL:http://www.youtube.com/watch?v=DyrQ6GS 9hdQ [retrieved on 2013-07-10]

## Description

The present invention relates to a line for the production and treatment of dough.

Nowadays, lines for the production of food products, such as for example croissants, are typically constituted by a device for the production of a band of dough which is then fed to a conveyor belt.

Positioned along the conveyor belt are, generally, a first cutting device which is designed to cut and splay the continuous band of dough into strips of a determined width which is a function of the geometric size and characteristics of the final product.

Downstream of the first cutting device is a second cutting device which is adapted to divide the respective strips of dough into triangular dough shapes.

Positioned downstream of such device is a device for spacing and aligning the triangular dough shapes, which is designed to orient the triangular dough shapes so that their bases face the direction of advancement of the conveyor belt used for moving the shapes.

The spacing and aligning device can be, for example, provided by means of an element for supporting a plurality of manipulator device assemblies, each one of which is constituted by a series of manipulator elements moved by a chain along a closed curvilinear trajectory and has at least one engagement section facing the conveyor belt on which the mutually spaced shapes advance, which are to be rotated.

When the manipulator elements advance, moved by the chain, along the engagement section, they engage with the upper surface in use of the shapes and, thanks to a mechanism, usually of the cam type, rotate the respective shape, clockwise or anticlockwise, by an angle of 90° by entraining the shape with it in the rotation and thus, at the end of the engagement section, the base of the shape faces the direction of advancement of the conveyor belt.

By way of example, spacing and alignment devices of such type are described in US 5,409,721.

Alternatively, spacing and alignment devices have been proposed which are constituted by a disk-like element arranged facing the conveyor belt on which the shapes to be rotated are moved.

In this case, the spacing and alignment device has elements for gripping the shapes to be rotated which are arranged at a perimetric region of the disk-like element and on its face which is directed toward the conveyor belt.

The disk-like element is caused to rotate about an axis that is substantially perpendicular to its plane of arrangement and, thus, to the plane of arrangement of the transported shapes, thus entraining the shapes with it in rotation. Such a device is described, for example, in DE 41 00 945 A1.

Also known from EP 1709872 B1 in the name of the same applicant is a spacing and alignment device which is provided with a structure for supporting at least one manipulator element, which is kinematically connected to an actuation device so as to be movable along a direction of actuation that is substantially perpendicular to the plane of arrangement of the strips of dough in order to move between a condition of disengagement, in which the (or each) manipulator element is spaced from the strips of dough, and a condition of engagement, in which the manipulator element engages at least one portion of a respective strip of dough.

The spacing and alignment device is provided, furthermore, with means of moving the manipulator element which are adapted to determine the rotation of the manipulator element itself, at least when the latter is in the condition of engagement, about a respective rotation axis which is substantially parallel to the direction of actuation.

The movement of the manipulator elements is achieved thanks to a motor, which is supported by the supporting structure.

A drawback of the solutions currently used is the fact that, if it is desired to move the supporting structure at high speeds in order to increase the speed of the line, vibration problems arise which are determined by the mechanical components supported by the supporting structure.

Specifically, the motor dedicated to the movement of the manipulator elements, which, as mentioned above, are supported directly by the supporting structure, has a considerable weight.

This entails a need to overdimension the drive means necessary for providing the back and forth motion of the supporting structure and, inevitably, it causes the onset of vibrations that impair the entire operation of the device.

EP 2 277 809 A1 discloses a spacing an alignment device for cut pieces of dough, comprising a supporting frame of a line for the conveyance of a continuous band of dough and a supporting structure for a handling element that is kinematically connected to an actuation device. The supporting structure is associated with a guiding element which can move with an alternating back-and-forth motion, the guiding element being constituted by a rack and a toothed section meshing with a movement wheel actuated by a motor.

The aim of the present invention is to eliminate, or at least drastically reduce, the above-mentioned drawbacks in conventional types of lines for the production and treatment of dough.

In particular, within this aim, an object of the present invention is to make available a line for the production and treatment of dough which makes it possible to manage the movement of the treatment elements in a very effective manner.

Another object of the present invention is to provide a line for the production and treatment of dough which is extremely reliable.

Another object of the invention is to devise a line for the production and treatment of dough which is low-cost, so as to make its use advantageous from an economic viewpoint as well.

This aim and these and other objects which will become more apparent hereinafter are all achieved by a line for the production and treatment of dough according to claim 1.

Further characteristics and advantages of the invention will become more apparent from the description of a number of preferred but not exclusive embodiments of a line for the production and treatment of dough according to the invention, which are illustrated by way of non-limiting example in the accompanying drawings wherein:
Figure 1 is a plan view of a portion of a line for the production and treatment of dough, according to the present invention;

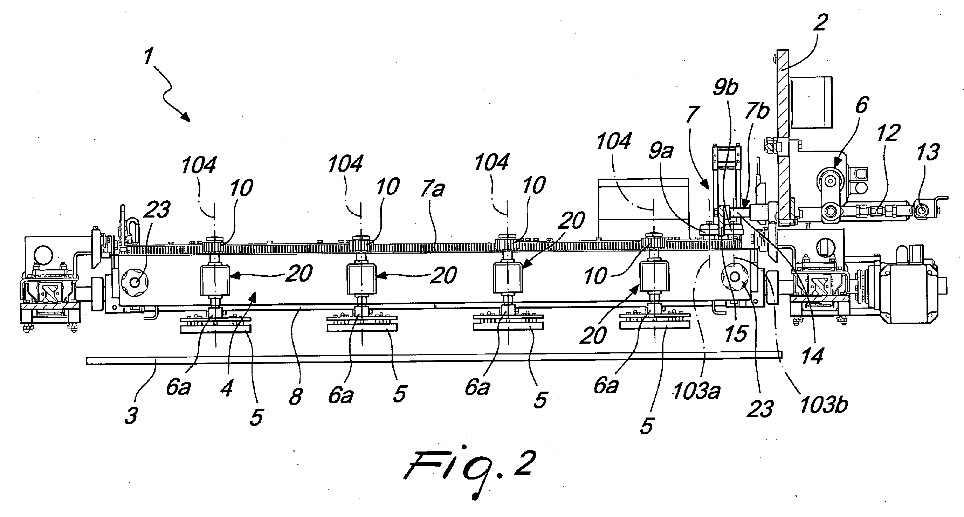

Figure 2 is a cross-sectional view along the line II-II in Figure 1;

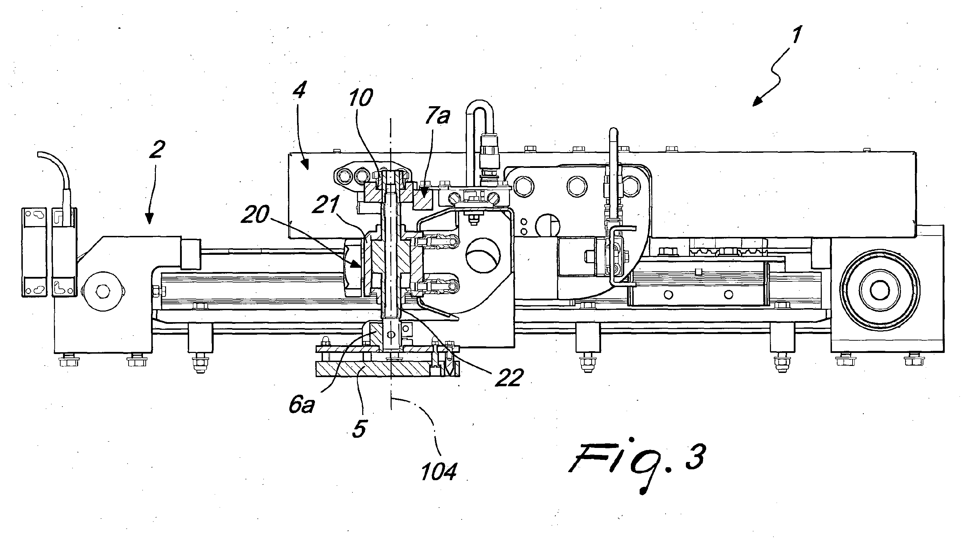

Figure 3 is a cross-sectional view along the line III-III in Figure 1;

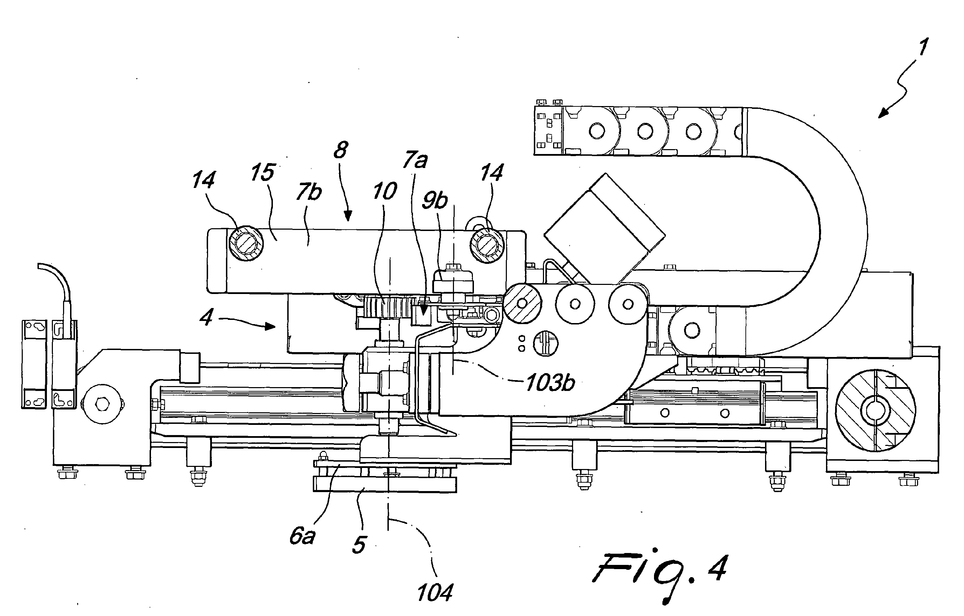

Figure 4 is a cross-sectional view along the line IV-IV in Figure 1.

In the embodiments illustrated, individual characteristics shown in relation to specific examples may in reality be interchanged with other, different characteristics, existing in other embodiments.

With reference to the figures, the present invention relates to a line, generally designated with the reference numeral 1, for the production and treatment of dough.

The line 1 comprises a fixed frame 2 and a conveyor belt 3 for at least one food product to be treated.

The conveyor belt 3 is movable, with respect to the fixed frame 2, along a movement path, designated by the arrow 100, substantially parallel to the direction of extension 101 of the conveyor belt 3.

The line 1 comprises a device 4 for the treatment of at least one food product conveyed on the conveyor belt 3.

In particular, the treatment device 4 is movable, with respect to the fixed frame 2, with an alternating motion that is parallel to the movement path 100.

The treatment device 4 supports at least one treatment element 5 that can be actuated, on command, by first motor means 6.

In particular, the treatment element or elements 5 are designed to engage at least one food product conveyed on the conveyor belt 3.

According to the present invention, the first motor means 6 are supported by the fixed frame 2 and are connected kinematically, by kinematic connection means 7, to the (or each) treatment element 5.

The alternating motion of the treatment device 4 comprises a reciprocating motion, designated by the double arrow 102, along an outward portion on a path that is parallel to and has the same direction as the movement path 100 and along a return portion on a path that is parallel to and opposite to the movement path 100.

The (or each) treatment element 5 is adapted to engage the food product during the travel of the treatment device 4 along the outward portion.

Conveniently, the treatment device 4 comprises a supporting element 8, for example configured as a bridge, for the (or each) treatment element 5.

The treatment element 5 is movable, with respect to the supporting element 8, according to at least two components of motion.

The first motor means 6 are adapted to determine at least one of the two components of motion of the treatment element 5 with respect to the supporting element 8.

For the purposes of example, as is (inter alia) described in more detail below, the two components of motion can be constituted by an approach toward and movement away from the conveyor belt 3 (which can be achieved, for example, thanks to the action of a pneumatic actuator that is integral with the treatment element 5) and a rotation about a rotation axis 104 that is perpendicular to the plane of arrangement of the conveyor belt 3 which is achieved, for example, thanks to the operation of the first motor means 6 and thanks to the kinematic connection means 7.

With reference to the embodiment shown in the figures, the kinematic connection means 7 comprise a first actuation body 7a which is supported by the supporting element 8 and is connected kinematically to the treatment element 5, and a second actuation body 7b which is connected kinematically to the first motor means 6.

Specifically, the second actuation body 7b is adapted to move the first actuation body 7a during the movement of the treatment device 4 with respect to the fixed frame 2.

The first actuation body 7a extends transversely to the movement path 100.

Advantageously, the first actuation body 7a can move in parallel to its own direction of extension.

Conveniently, the second actuation body 7b comprises an actuation bar 15 that extends parallel to the movement path 100 over a distance at least corresponding to the stroke of the first actuation body 7a during the movement of the treatment device 4 with respect to the fixed frame 2.

The first actuation body 7a can move, furthermore, along a direction that is substantially perpendicular to its own direction of extension.

Specifically, the first actuation body 7a is entrained by the supporting element 8 along the movement path 100 and, in particular, along the reciprocating motion 102.

Furthermore, slider means 11 are provided between the first actuation body 7a and the supporting element 8 which are adapted to allow the relative movement of the first actuation body 7a with respect to the supporting element 8 along a direction that is transverse to the movement path 100.

The first actuation body 7a is associated with a first and a second motion transfer device 9a and 9b.

In particular, the first and the second motion transfer device 9a and 9b are arranged on opposite sides with respect to the actuation bar 15.

Conveniently, the first and the second motion transfer device 9a and 9b comprise at least one respective bearing which has a rotation axis 103a and 103b that is substantially perpendicular to the plane of arrangement of the conveyor belt 3.

The second actuation means 7b are, overall, constituted by a crank 12, which is connected to the output shaft of the first motor means 6, and is articulated to a pusher element 13.

The pusher element 13 is integrally connected, conveniently by two arms for connection 14, to the actuation bar 15.

Advantageously, the first actuation body 7a comprises a rack that meshes with a pinion 10 for the actuation of each treatment element 5.

According to a preferred embodiment, the treatment device 4 comprises a device for spacing and aligning dough portions.

Advantageously, the supporting element 8 is associated with a plurality of treatment elements 5 which are arranged mutually spaced apart.

As noted above, the treatment device 4 can be constituted by a spacing and alignment device, particularly for strips of dough.

In this case, the conveyor belt 3 is associated with means for cutting the one or (more usually) more continuous bands of dough into strips of dough.

In particular the means for cutting, not shown, cut each one of the continuous bands into strips of dough having the shape of an isosceles triangle; the bases of each shape are arranged, in an alternating manner, at the sides of the corresponding band of dough.

In this case, the treatment elements 5 are constituted by respective manipulator elements 6a.

The (or each) manipulator element 6a can move along a direction of actuation, which is substantially perpendicular to the plane of arrangement of the strips of dough, in order to move between a condition of disengagement, in which the (or each) manipulator element 6a is spaced from the strips of dough, and a condition of engagement in which the manipulator element 6a (or the manipulator elements) are engaged with at least one portion of a respective strip of dough.

The spacing and alignment device is furthermore connected, by the kinematic connection means 7, to the first motor means 6, which are adapted to determine the rotation of the manipulator element 6a, at least when the latter is in the condition of engagement, about a respective rotation axis 104 which is substantially parallel to the direction of actuation.

The supporting element 8, or at least one portion of it that is integral with the manipulator elements 6a, is slideably coupled, for example by way of interposition of one or more straight guides, to the fixed frame 2 and, simultaneously, kinematically connected to a movement element, not shown in the figures, which is adapted to move, with a reciprocating motion 102, the supporting element 8 and, thus, the (or each) manipulator element 6a supported by it.

Advantageously, when the manipulator element or elements 6a are in the condition of engagement with the respective strip of dough, the supporting structure has a direction of movement that is the same as the direction of advancement of the strips of dough in engagement with the respective manipulator element and a speed at least corresponding to the advancement speed of the strip of dough.

It should be noted that the advancement speed of the manipulator elements 6a is faster than that of the strips of dough so as to rotate (and at the same time space apart) the strips of dough in succession without the risk that the strip of dough being rotated can collide with the strip of dough immediately upstream and being advanced.

Delving deeper into the details, the actuation device comprises a linear actuator 20 which has the body of the actuator 21 integral with the supporting element 8 and the shank 22 integral in rotation with a respective manipulator element.

Advantageously, the supporting element is associated with the first actuation body 7a which can move with an alternating reciprocating motion in a direction that is transverse with respect to the advancement direction of the supporting element 8.

Between the first actuation body 7a and the manipulator element or elements 6a there is a pinion 10 which is adapted to convert the alternating reciprocating motion of the first actuation body 7a into a rotary motion of the (or each) manipulator element 6a, about the respective rotation axis 104.

According to a preferred embodiment, the shank 22 of each linear actuator 20 is rotatably supported, via, for example, the interposition of bearings, by the respective body of the actuator 21 about its own direction of extension and, thus, about the rotation axis 104 of the respective manipulator element 6a.

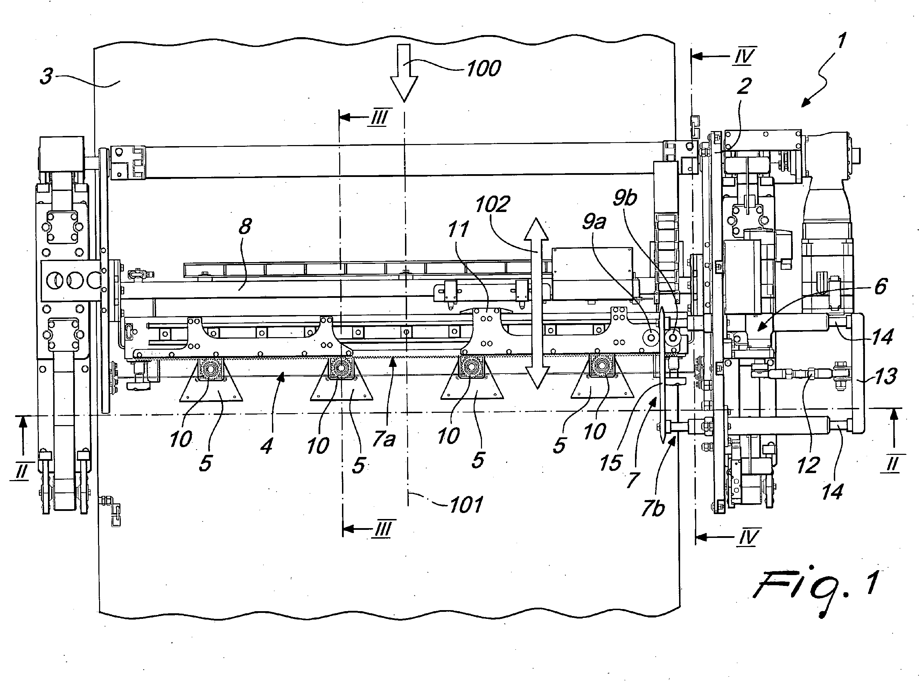

As is clearly illustrated in the top view in Figure 1, the supporting element 8 is typically associated with a plurality of bodies of the actuator 21 which have a respective shank 22 that is integral with a respective manipulator element 6a and with a respective pinion 10 that meshes with the rack.

According to a further important aspect of the invention, the bodies of the actuator, and in general the manipulator elements 6a, can be detachably fixed to the supporting element 8.

In this regard, it is possible to arrange, along a crossmember supported by the supporting element 8, with the desired spacing, a number of manipulator elements 6a which is sufficient for the various operating modes of the line 1.

It is furthermore possible to have means for the detachable anchoring of the crossmember to the supporting element 8 which are constituted, for example, by a pair of end knobs 23 supporting a threaded shank.

In essence, the linear actuators 20, which are driven by a pneumatic circuit, bring the respective manipulator elements 6a into the condition of engagement with the strip of dough advancing along the conveyor belt 3.

At the same time, actuation means drive the supporting element 8 so as to move it along the straight guide thus ensuring, during the step of engagement of the manipulator elements 6a with the strips of dough, that the manipulator elements 6a and the respective strips of dough that they engage are moving in the same direction and the same speed.

In such condition, the rack moves along a direction which is transverse to the movement path 100, thus rotating, thanks to the operation of the first motor means 6 which are supported directly by the fixed frame 2, the stems 22 and the manipulator elements 6a associated with them, with consequent rotation of the strips of dough.

Once the rotation, in general by 90°, of the strips of dough has ended, the supporting element 8 is moved, again along the straight guide, but in the direction opposite to the direction of advancement of the strips of dough and, simultaneously, the linear actuators 20 bring the manipulator elements 6a into the condition of disengagement.

All the characteristics of the invention, indicated above as advantageous, convenient or similar, may also be missing or be substituted by equivalent characteristics.

The invention, thus conceived, is susceptible of numerous modifications and variations, all of which are within the scope of the appended claims.

In practice it has been found that in all the embodiments the invention has achieved the intended aim and objects.

In particular, the fact that the first motor means 6 are supported directly by the fixed frame 2 has made it possible to appreciably reduce the inertia of the treatment device 4 with consequent elimination of the vibrations.

In practice the materials employed as well as the dimensions may be any according to requirements.

Moreover, all the details may be substituted by other, technically equivalent elements.

Where the technical features mentioned in any claim are followed by reference numerals and/or signs, those reference numerals and/or signs have been included for the sole purpose of increasing the intelligibility of the claims and accordingly, such reference numerals and/or signs do not have any limiting effect on the interpretation of each element identified by way of example by such reference numerals and/or signs.

## Claims

1. A line (1) for the production and treatment of dough, comprising a fixed frame (2) and a conveyor belt (3) for at least one food product to be treated, said conveyor belt (3) being movable with respect to said fixed frame (2) along a movement path (100) that is substantially parallel to its direction of extension (101), said line (1) comprising a device (4) for treating said at least one food product conveyed on said conveyor belt (3), said treatment device (4) being movable with respect to said frame with an alternating motion that is parallel to said movement path (100), said treatment device (4) comprising a supporting element (8) for supporting at least one treatment element (5) that can be actuated on command by first motor means (6) and is designed to engage with said at least one food product conveyed on said conveyor belt (3), said first motor means (6) being supported by said fixed frame (2) and being connected kinematically, by kinematic connection means (7), to said at least one treatment element (5), said kinematic connection means (7) comprising a first actuation body (7a) which is supported by said supporting element (8) and is connected kinematically to said at least one treatment element (5), and a second actuation body (7b), which is connected kinematically to said first motor means (6), said second actuation body (7b) being adapted to move said first actuation body (7a) during the movement of said treatment device (4) with respect to said fixed frame (2), **characterized in that** said second actuation body (7b) comprises an actuation bar (15) that runs parallel to said movement path (100) for a distance that corresponds at least to the stroke of said first actuation body (7a) during the movement of said treatment device (4) with respect to said fixed frame (2).

2. The line (1) according to claim 1, **characterized in that** said alternating motion of said treatment device (4) comprises a reciprocating motion (102) along an outward portion on a path that is parallel to and has the same direction as said movement path (100) and along a return portion on a path that is parallel to and opposite to said movement path (100).

3. The line (1) according to one or more of the preceding claims, **characterized in that** said treatment element (5) is adapted to engage with said at least one food product during the travel of said treatment device (4) along said outward portion.

4. The line (1) according to one or more of the preceding claims, **characterized in that** said at least one treatment element (5) is movable, with respect to said supporting element (8), according to at least two components of motion, said first motor means (6) being adapted to determine at least one of said at least two components of motion of said at least one treatment element (5) with respect to said supporting element (8).

5. The line (1) according to one or more of the preceding claims, **characterized in that** said first actuation body (7a) extends transversely to said movement path (100).

6. The line (1) according to one or more of the preceding claims, **characterized in that** said first actuation body (7a) can move in parallel to its own direction of extension.

7. The line (1) according to one or more of the preceding claims, **characterized in that** said first actuation body (7a) can move along a path that is substantially perpendicular to its own direction of extension.

8. The line (1) according to one or more of the preceding claims, **characterized in that** said first actuation body (7a) is entrained by said supporting element (8) along said movement path (100), slider means being provided between said first actuation body (7a) and said supporting element (8) and being adapted to allow the relative movement of said first actuation body (7a) with respect to said supporting element (8) along a direction that is transverse to said movement path (100).

9. The line (1) according to one or more of the preceding claims, **characterized in that** said first actuation body (7a) is associated with a first device and a second device (9a, 9b) for transferring motion, which are arranged on opposite sides with respect to an actuation bar (15).

10. The line (1) according to claim 9, **characterized in that** said first and second motion transfer devices (9a, 9b) comprise at least one respective bearing which has a rotation axis (103a, 103b) that is substantially perpendicular to said conveyor belt (3).

11. The line (1) according to one or more of the preceding claims, **characterized in that** said first actuation body (7a) comprises a rack that meshes with a pinion (10) for the actuation of said at least one treatment element (5).

12. The line (1) according to one or more of the preceding claims, **characterized in that** said treatment device (4) comprises a device for spacing and aligning dough portions.

13. The line (1) according to one or more of the preceding claims, **characterized in that** said supporting element (8) is associated with a plurality of mutually spaced treatment elements.

## Patentansprüche

1. Fertigungslinie (1) für die Herstellung und Behandlung von Teig, umfassend einen festen Rahmen (2) und ein Förderband (3) für mindestens ein zu behandelndes Lebensmittelprodukt, das Förderband (3) ist bezüglich des festen Rahmens (2) längs eines im wesentlichen parallel zu seiner Erstreckung (101) verlaufenden Bewegungspfads (100) bewegbar, die Fertigungslinie (1) umfasst eine Vorrichtung (4) zum Behandeln des mindestens einen auf dem Förderband (3) geförderten Lebensmittelprodukts, die Behandlungsvorrichtung (4) ist bezüglich des Rahmens in einer parallel zu dem Bewegungspfad (100) verlaufenden Wechselbewegung bewegbar, die Behandlungsvorrichtung (4) umfasst einen Stützelement (8) zum Stützen von mindestens einem Behandlungselement (5), welches auf Anweisung durch ein erstes Motormittel (6) betätigt werden kann und zur in Eingriffnahme mit dem mindestens einen auf dem Förderband (3) geförderten Lebensmittelprodukt ausgebildet ist, das erste Motormittel (6) wird durch den festen Rahmen (2) gestützt und durch ein kinematisches Verbindungsmittel (7) kinematisch mit dem mindestens einen Behandlungselement (5) verbunden, das kinematische Verbindungsmittel (7) umfasst einen ersten Betätigungskörper (7a), welcher durch das Stützelement (8) gestützt wird und kinematisch mit dem mindestens einen Behandlungselement (5) verbunden ist, und einen zweiten Betätigungskörper (7b), welcher kinematisch mit dem ersten Motormittel (6) verbunden ist, der zweite Betätigungskörper (7b) ist angepasst, um den ersten Betätigungskörper (7a) während der Bewegung der Behandlungsvorrichtung (4) bezüglich des festen Rahmens (2) zu bewegen, **dadurch gekennzeichnet, dass** der zweite Betätigungskörper (7b) einen Betätigungsholm (15) umfasst, der über eine Distanz, die mindestens einem Hub des erstes Betätigungskörpers (7a) während der Bewegung der Behandlungsvorrichtung (4) bezüglich des festen Rahmens (2) entspricht, parallel zum Bewegungspfad (100) verläuft.

2. Fertigungslinie (1) nach Anspruch 1, **dadurch gekennzeichnet, dass** die Wechselbewegung der Behandlungsvorrichtung (4) eine Hin- und HerBewegung (102) umfasst, welche längs eines Auswärtsabschnittes auf einem Pfad verläuft, der parallel zu und in die gleiche Richtung wie der Bewegungspfad (100) verläuft, und längs eines Rückkehrabschnitts auf einem Pfad verläuft, der parallel zu und entgegen des Bewegungspfads (100) verläuft.

3. Fertigungslinie (1) nach einem oder mehreren der voranstehenden Ansprüche, **dadurch gekennzeichnet, dass** das Behandlungselement (5) angepasst ist, um das mindestens eine Lebensmittelprodukt während der Bewegung der Behandlungsvorrichtung (4) längs des Auswärtsabschnittes in Eingriff zu nehmen.

4. Fertigungslinie (1) nach einem oder mehreren der voranstehenden Ansprüche, **dadurch gekennzeichnet, dass** das mindestens eine Behandlungselement (5) bezüglich des Stützelements (8) entsprechend von mindestens zwei Bewegungskomponenten bewegbar ist, wobei das erste Motormittel (6) angepasst ist, um mindestens eine der mindestens zwei Bewegungskomponenten des mindestens einen Behandlungselements (5) bezüglich des Stützelements (8) zu bestimmen.

5. Fertigungslinie (1) nach einem oder mehreren der voranstehenden Ansprüche, **dadurch gekennzeichnet, dass** sich der erste Betätigungskörper (7a) quer zu dem Bewegungspfad (100) erstreckt.

6. Fertigungslinie (1) nach einem oder mehreren der voranstehenden Ansprüche, **dadurch gekennzeichnet, dass** sich der erste Betätigungskörper (7a) parallel zu seiner eigenen Erstreckungsrichtung bewegen kann.

7. Fertigungslinie (1) nach einem oder mehreren der voranstehenden Ansprüche, **dadurch gekennzeichnet, dass** sich der erste Betätigungskörper (7a) längs eines im Wesentlichen senkrecht zu seiner eigenen Erstreckungsrichtung verlaufenden Pfads bewegen kann.

8. Fertigungslinie (1) nach einem oder mehreren der voranstehenden Ansprüche, **dadurch gekennzeichnet, dass** der erste Betätigungskörper (7a) durch das Stützelement (8) längs des Bewegungspfads (100) mitgenommen wird, wobei Gleitmittel zwischen dem ersten Betätigungskörper (7a) und dem Stützelement (8) bereitgestellt und angepasst sind, um eine relative Bewegung des ersten Betätigungskörper (7a) bezüglich des Stützelements (8) längs einer quer zum Bewegungspfad (100) gerichteten Richtung zu ermöglichen.

9. Fertigungslinie (1) nach einem oder mehreren der voranstehenden Ansprüche, **dadurch gekennzeichnet, dass** der erste Betätigungskörper (7a) mit einer ersten Vorrichtung und einer zweiten Vorrichtung (9a, 9b) für eine Bewegungsübertragung verknüpft ist, welche bezüglich des Betätigungsholms (15) auf entgegengesetzten Seiten angeordnet sind.

10. Fertigungslinie (1) nach Anspruch 9, **dadurch gekennzeichnet, dass** die erste und zweite Bewegungsübertragungsvorrichtung (9a, 9b) jeweils eine Lagerung mit einer im wesentlichen senkrecht zu dem Förderband (3) verlaufenden Rotationsachse (103a, 103b) haben.

11. Fertigungslinie (1) nach einem oder mehreren der voranstehenden Ansprüche, **dadurch gekennzeichnet, dass** der erstes Betätigungskörper (7a) eine Zahnstange umfasst, welche zur Betätigung des mindestens einen Behandlungselements (5) mit einem Ritzel (10) kämmt.

12. Fertigungslinie (1) nach einem oder mehreren der voranstehenden Ansprüche, **dadurch gekennzeichnet, dass** die Behandlungsvorrichtung (4) eine Vorrichtung zum im Abstand Anordnen und Ausrichten von Teigportionen umfasst.

13. Fertigungslinie (1) nach einem oder mehreren der voranstehenden Ansprüche, **dadurch gekennzeichnet, dass** das Stützelement (8) mit einer Vielzahl von zueinander beabstandeten Behandlungselementen verbunden ist.

## Revendications

1. Ligne (1) pour la production et le traitement de pâte, comprenant un bâti fixe (2) et une courroie convoyeuse (3) pour au moins un produit alimentaire devant être traité, ladite courroie convoyeuse (3) étant mobile par rapport audit bâti fixe (2) le long d'un trajet de déplacement (100) qui est sensiblement parallèle à sa direction d'extension (101), ladite ligne (1) comprenant un dispositif (4) pour traiter ledit au moins un produit alimentaire convoyé sur ladite courroie convoyeuse (3), ledit dispositif de traitement (4) étant mobile par rapport audit bâti avec un mouvement de va-et-vient qui est parallèle audit trajet de déplacement (100), ledit dispositif de traitement (4) comprenant un élément de support (8) pour supporter au moins un élément de traitement (5), qui peut être actionné sur commande par des premiers moyens formant moteur (6) et qui est conçu de façon à venir en prise avec ledit au moins un produit alimentaire convoyé sur ladite courroie convoyeuse (3), lesdits premiers moyens formant moteur (6) étant supportés par ledit bâti fixe (2) et étant reliés de façon cinématique, par des moyens de liaison cinématique (7), audit au moins un élément de traitement (5), lesdits moyens de liaison cinématique (7) comprenant un premier corps d'actionnement (7a) qui est supporté par ledit élément de support (8) et qui est relié de façon cinématique audit au moins un élément de traitement (5), et un deuxième corps d'actionnement (7b), qui est relié de façon cinématique auxdits premiers moyens formant moteur (6), ledit deuxième corps d'actionnement (7b) étant adapté de façon à déplacer ledit premier corps d'actionnement (7a) durant le déplacement dudit dispositif de traitement (4) par rapport audit bâti fixe (2), **caractérisée en ce que** ledit deuxième corps d'actionnement (7b) comprend une barre d'actionnement (15) qui s'étend parallèlement audit trajet de déplacement (100) sur une distance qui correspond au moins à la course dudit premier corps d'actionnement (7a) durant le déplacement dudit dispositif de traitement (4) par rapport audit bâti fixe (2).

2. Ligne (1) selon la revendication 1, **caractérisée en ce que** ledit mouvement de va-et-vient dudit dispositif de traitement (4) comprend un mouvement alternatif (102) le long d'une partie d'aller sur un trajet qui est parallèle audit trajet de déplacement (100) et qui a la même direction que celui-ci, et le long d'une partie de retour sur un trajet qui est parallèle audit trajet de déplacement (100) et qui est opposé à celui-ci.

3. Ligne (1) selon l'une ou plusieurs des revendications précédentes, **caractérisée en ce que** ledit élément de traitement (5) est adapté de façon à venir en prise avec ledit au moins un produit alimentaire durant le déplacement dudit dispositif de traitement (4) le long de ladite partie d'aller.

4. Ligne (1) selon l'une ou plusieurs des revendications précédentes, **caractérisée en ce que** ledit au moins un élément de traitement (5) est mobile, relativement audit élément de support (8), selon au moins deux composantes de mouvement, lesdits premiers moyens formant-moteur (6) étant adaptés pour déterminer au moins l'une desdites au moins deux composantes de mouvement dudit au moins un élément de traitement (5) par rapport audit élément de support (8).

5. Ligne (1) selon l'une ou plusieurs des revendications précédentes, **caractérisée en ce que** ledit premier corps d'actionnement (7a) s'étend transversalement audit trajet de déplacement (100).

6. Ligne (1) selon l'une ou plusieurs des revendications précédentes, **caractérisée en ce que** ledit premier corps d'actionnement (7a) peut se déplacer parallèlement à sa propre direction d'extension.

7. Ligne (1) selon l'une ou plusieurs des revendications précédentes, **caractérisée en ce que** ledit premier corps d'actionnement (7) peut se déplacer le long d'un trajet qui est sensiblement perpendiculaire à sa propre direction d'extension.

8. Ligne (1) selon l'une ou plusieurs des revendications précédentes, **caractérisée en ce que** ledit premier corps d'actionnement (7a) est entraîné par ledit élément de support (8) le long dudit trajet de déplacement (100), des moyens de coulissement étant disposés entre ledit premier corps d'actionnement (7) et ledit élément de support (8), et étant adaptés pour permettre le déplacement relatif dudit premier corps d'actionnement (7a) par rapport audit élément de support (8) selon une direction qui est transversale audit trajet de déplacement (100).

9. Ligne (1) selon l'une ou plusieurs des revendications précédentes, **caractérisée en ce que** ledit premier corps d'actionnement (7a) est associé à un premier dispositif et à un deuxième dispositif (9a, 9b) pour transférer un mouvement, ceux-ci étant disposés sur des côtés opposés par rapport à une barre d'actionnement (15).

10. Ligne (1) selon la revendication 9, **caractérisée en ce que** lesdits premier et deuxième dispositifs de transfert de mouvement (9a, 9b) comprennent au moins un palier respectif, qui comporte un axe de rotation (103a, 103b) qui est sensiblement perpendiculaire à ladite courroie convoyeuse (3).

11. Ligne (1) selon l'une ou plusieurs des revendications précédentes, **caractérisée en ce que** ledit premier corps d'actionnement (7a) comprend une crémaillère qui s'engrène avec un pignon (10) pour l'actionnement dudit au moins un élément de traitement (5).

12. Ligne (1) selon l'une ou plusieurs des revendications précédentes, **caractérisée en ce que** ledit dispositif de traitement (4) comprend un dispositif pour espacer et aligner des portions de pâte.

13. Ligne (1) selon l'une ou plusieurs des revendications précédentes, **caractérisée en ce que** ledit élément de support (8) est associé à une pluralité d'éléments de traitement mutuellement espacés.
